# EUROPEAN PATENT APPLICATION

(11) **EP 4 687 269 A1**
(43) Date of publication of application: **04.02.2026**
(21) Application number: 24197465.8
(22) Date of filing: 30.08.2024
(51) Int. Cl.: H02K 9/22

(54) **COOLING SYSTEM FOR STATORS OF ROTATING ELECTRIC MACHINES, METHOD OF MANUFACTURING A COOLING PLATE AND CORRESPONDING ROTATING ELECTRIC MACHINE**

(30) Priority: 02.08.2024 BR 102024015918
(71) Applicant: Weg Equipamentos Elétricos S/A, 89256-900 Jaraguá do Sul, SC (BR)
(72) Inventor: SANTOS BORGES, Samuel, 89251-490 Jaraguá do Sul (BR)
(74) Representative: Dantz, Jan Henning

(57) **Abstract**

The present invention relates to a cooling system for stators (300) of rotating electric machines, comprising at least one cooling plate (100) and at least one cooling fluid circuit, wherein the cooling plate (100) comprises a main body (110) which, in its outer portion or external crown, comprises at least one central protrusion (120), a plurality of peripheral protrusions (130-1, ..., 130-n) and, in its inner portion or internal crown, comprises a plurality of teeth (150) which form a plurality of grooves (160) between the teeth (150), wherein the main body (110), in its interior, comprises a plurality of tangential channels (111-1, ..., 111-n). The present invention further relates to a method of manufacturing a cooling plate (100) and a corresponding rotating electric machine.

## Description

### Field of application

The present invention pertains to the field of rotating electric machines, in particular arrangements for cooling magnetic circuits comprising channels or ducts for cooling fluids, notably rotating electric machines comprising cold plates for transferring heat to a cooling fluid.

### Background of the invention

Rotating electric machines are equipment used for transforming electric energy into mechanical energy, in the case of motors, and for transforming mechanical energy into electric energy, in the case of generators. They are essentially composed of four main structures, which are the housing, stator, rotor, and bearings/caps. In addition to these elements, depending on the distinct features of each rotating electric machine, there may also be auxiliary systems such as cooling, using gases or liquids, in which the fluids commonly used are air or water, respectively.

The housing is a static element responsible for integrating the structures of the rotating electric machine.

The stator is the static active (energized) component responsible for transmitting the magnetic flux for rotating the rotor, in the case of motors, and for transmitting the energy generated by the rotor, in the case of generators, whereas the rotor is the active (energized) component of the rotating electric machine.

The rotor, in turn, is essentially composed of a shaft onto which one or more cages, coils, or permanent magnets are arranged, depending on the construction type and operating principle of the rotating electric machine.

The bearings, in turn, are the elements responsible for coupling the rotating parts to the static parts of a rotating electric machine, providing, for instance, coupling, support and centering of the (rotating) rotor in relation to the (static) stator, allowing for relative movement between rotor and stator, as well as the transmission of forces therebetween.

Systems dedicated to cooling rotating electric machines have the function of reducing the temperature of electrically energized elements, the temperature deriving from the Joule effect resulting from the circulation of current through conductive elements of either the stator or the rotor.

As rotating electric machines operate under the most diverse conditions of rotation, mechanical load, and temperature, it is necessary to control the temperature inside the housing, especially the temperature of the rotor-stator assembly, more specifically the stator coil.

Several cooling arrangements are known in the state of the art, including structures for internal circulation of cooling fluid in the housing. Such structures are formed by ducts, tubes, or worms that surround the stator and, associated with external devices, such as, for instance, heat exchangers, direct this fluid through the rotating electric machine, promoting thermal exchange between the heated internal environment of the rotating electric machine and an external environment (heat exchanger), with reduced temperature, resulting in an operating temperature for the energized elements according to their thermal class and operating class.

This type of cooling arrangement, however, requires significant construction changes, especially to the housing, which needs to be built so as to include a worm that wraps around and surrounds the axial extension of the stator, which significantly increases both the dimensions and the weight of the rotating electric machine. Furthermore, housings of this nature are usually cast and machined in at least two pieces, making it difficult to maintain the alignment of the ends of the worm channels which are located at the connection interfaces of the two pieces, in addition to the constant concern of ensuring worm sealing.

Another type of known cooling arrangement comprises the use of cooling plates or cold plates installed close to the heat sources of the electric machine and through which a cooling fluid circulates helping to remove heat from the machine. However, usual cold plates do not provide the desired cooling, especially of the stator, given that the geometries and constructions currently used cannot bring the cooling fluid close enough to the stator grooves, which house the coils, components that normally make up the region of greatest heat generation in a stator.

Generally, rotating electric machines are used in distinct types of applications, which require different construction forms and installation requirements. Regarding its application in the electric traction segment, the positioning of a rotating electric machine in the assembly takes place according to the vehicle manufacturer's design, which implies several possible arrangements for the hydraulic systems used for cooling the rotating electric machine, which is often not shared with the suppliers of the rotating electric machine. Therefore, a rotating electric machine with a liquid cooling system becomes advantageous, given that it ensures versatility and installation modularity.

The challenge therefore lies in designing a cooling system for stators of rotating electric machines without the use of conventional internal worms, and which is, at the same time, simple to build and manufacture, optimizing both the use of raw materials and the manufacturing and assembly process, without implying an increase in the final weight of the rotating electric machine, or also providing a reduction in its total weight.

### State of the art

There are several solutions in the state of the art that aim to cool rotating electric machines by means of circuits comprising cooling fluids.

One such example is patent document EP859447 which discloses and describes a liquid-cooled electric motor housing, which contains a cooling worm cast into the housing, in which the worm is arranged in a helical configuration and the stator housing is molded around the worm, in which the worm is embedded inside and integrally with the housing. Spacer or stabilizer bars are engaged with the worm, provide support for the worm, and facilitate maintenance of the desired spacing between worm lengths and between the worm and the housing wall.

Document EP859447 is a typical example of cooling electric machine elements by means of a worm cast into an additional housing surrounding the stator. Thus, this solution has problems already known from the state of the art, which are the presence of an additional structure that adds unwanted weight to the rotating electric machine, has increased manufacturing complexity, in addition to not providing cooling channels close to the stator grooves, which is, as already discussed, the part of the stator in which the greatest heat generation takes place.

Another example is patent document DE102022104375, which discloses and describes a stator for an axial flux electric machine comprising a stator wind-up with a radially internal short-circuit ring and a plurality of stator rods which extend radially outward from the short-circuit ring, wherein a plurality of cooling ducts are formed in the stator wind-up, which cooling ducts each extend in the radial direction through the short-circuit ring and one of the stator bars.

The solution in DE102022104375 uses a plurality of radial tube segments which require the adaptation of both the housing and the short-circuit ring, wherein the channels are used in conjunction with a guide element, positioned around the stator, whereby element forming the fluid passage circuit and not the channels, implying a constructively expensive solution which requires several components, increasing the cost of the product. Furthermore, the cooling arrangement of DE102022104375 does not allow heat to be extracted from the part closest to the stator slots over its entire circumference. Finally, using radial tube segments does not allow using more than one cooling device on the same rotating electric machine.

As can be inferred from the description above, there is room and demand for a solution for cooling systems for stators that overcomes the disadvantages of the state of the art, in particular a cooling system with cold plates comprising fluid circulation channels in the part closest to the stator grooves, wherein at least one cooling plate can be used in the axial extension of the stator and which is also simple and low-cost to build and manufacture, optimizing both the use of raw materials and the manufacturing and assembly process, providing a reduction in the final weight of the rotating electric machine, an important feature needed in electric mobility, and mainly increasing the efficiency of the heat exchange of the machine's cooling system.

### Objects of the invention

One of the objects of the present invention is therefore providing a cooling system for stators of rotating electric machines, according to the features of claim 1 of the appended set of claims.

Another objective of the present invention is providing a method of manufacturing a cooling plate, according to the features of claim 13 of the appended set of claims.

Yet another object of the present invention is providing a rotating electric machine according to the features of claim 14 of the set of claims.

Additional features and details thereof are presented in the dependent claims.

### Brief description of the drawings

For a better understanding and visualization of the object to which the invention relates, the present invention will now be described with reference to the appended figures, representing the technical effect achieved by means of an exemplary embodiment without limiting the scope of the present invention, wherein, schematically:

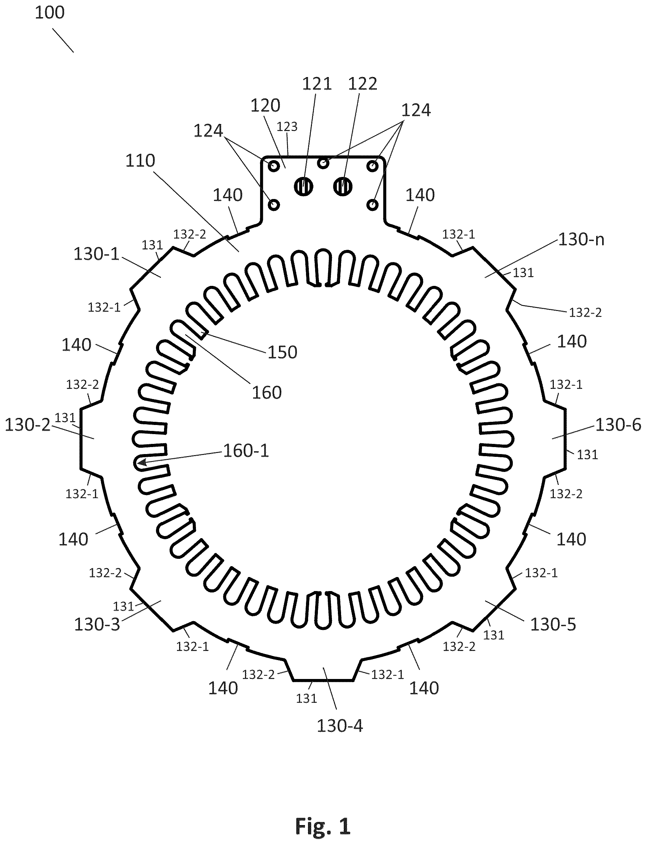

- Figure 1:: shows a front view of a cooling plate of a cooling system for stators of rotating electric machines, according to the invention;

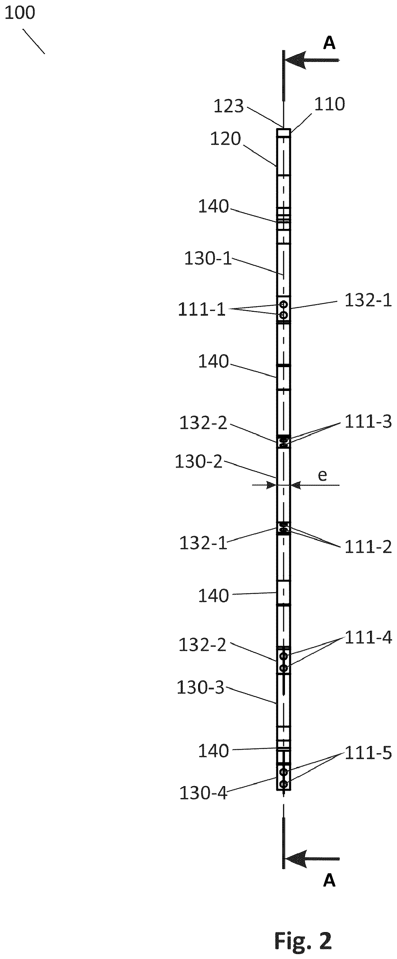

- Figure 2:: shows a side view of the cooling plate in Figure 1;

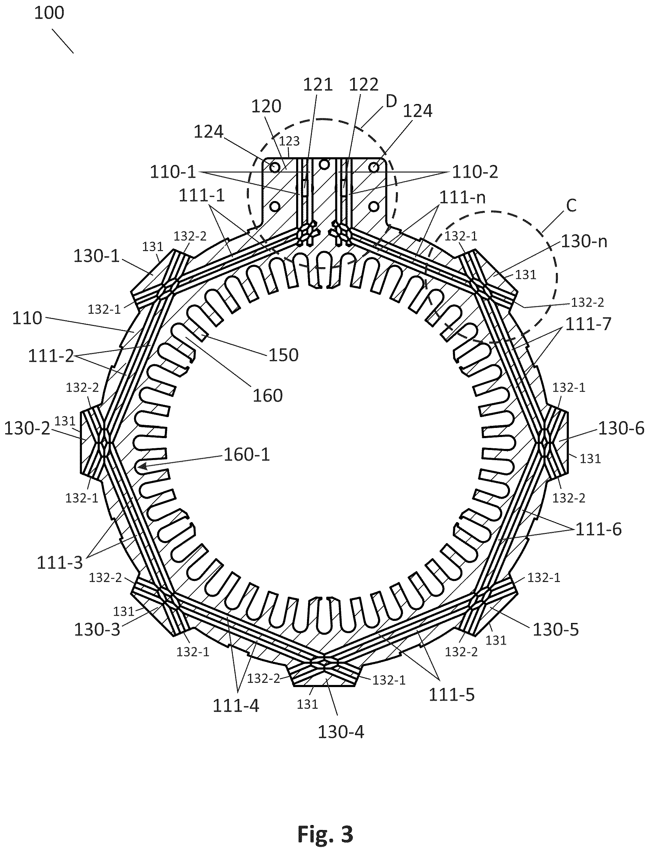

- Figure 3:: shows a front view of section A-A in Figure 2, highlighting the internal cooling channels;

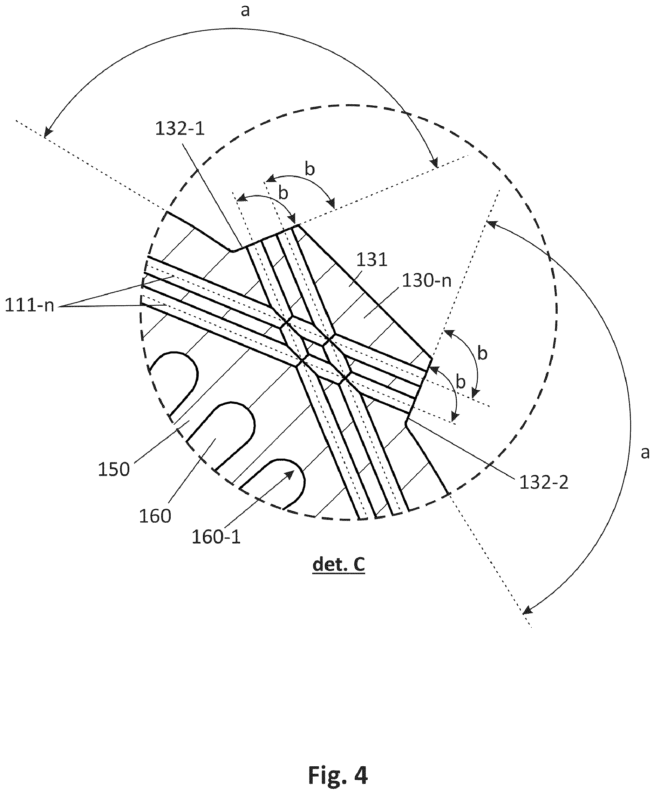

- Figure 4:: shows an enlarged side view of detail C in Figure 3;

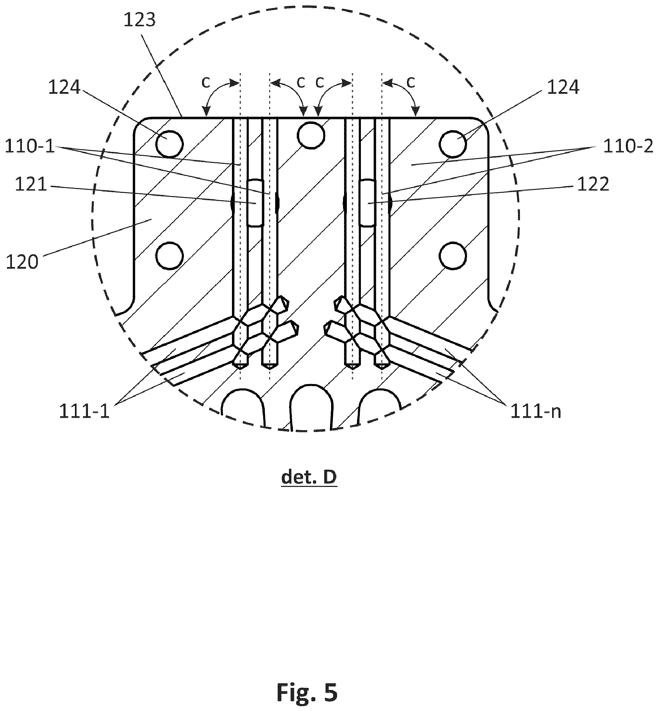

- Figure 5:: shows an enlarged side view of detail D in Figure 3;

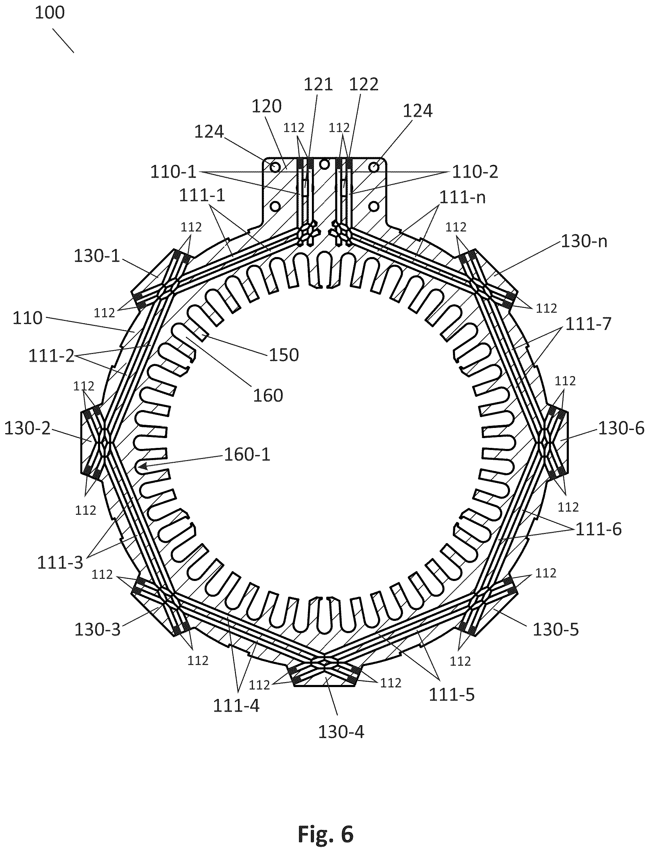

- Figure 6:: shows a front view of section A-A in Figure 2, highlighting the sealing elements;

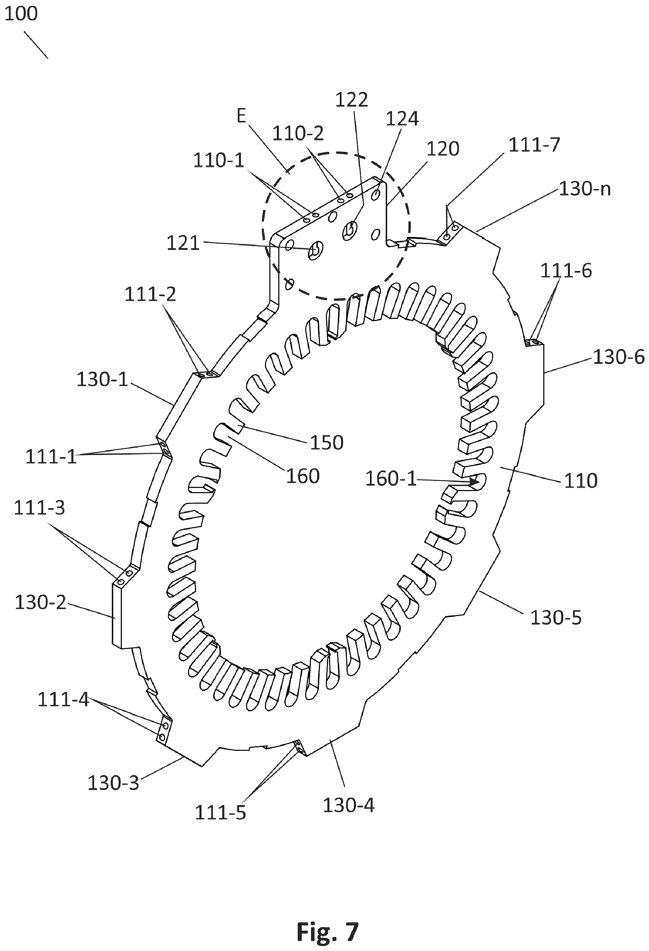

- Figure 7:: shows a perspective view of the cooling plate in Figure 1;

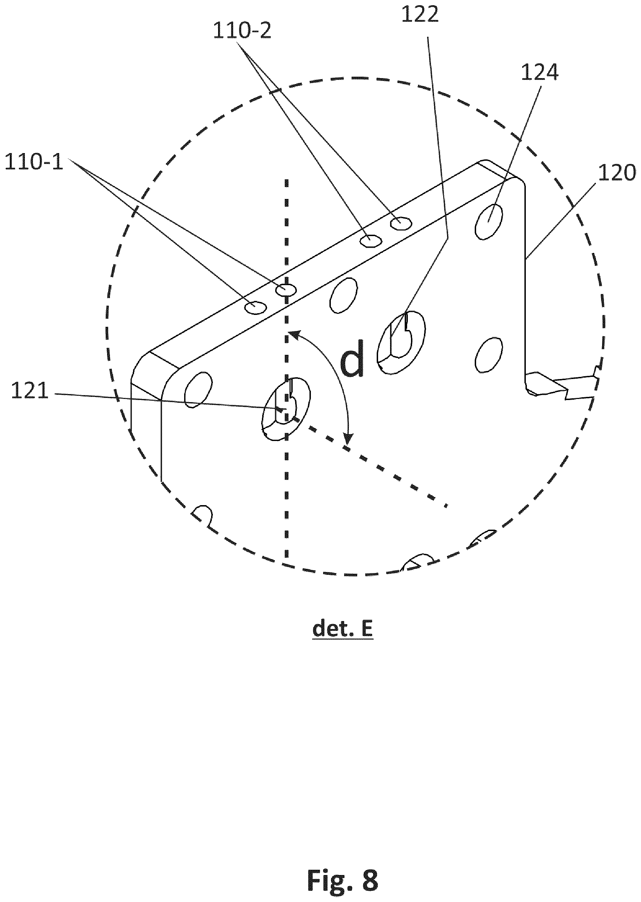

- Figure 8:: shows an enlarged perspective view of detail E of Figure 7; and

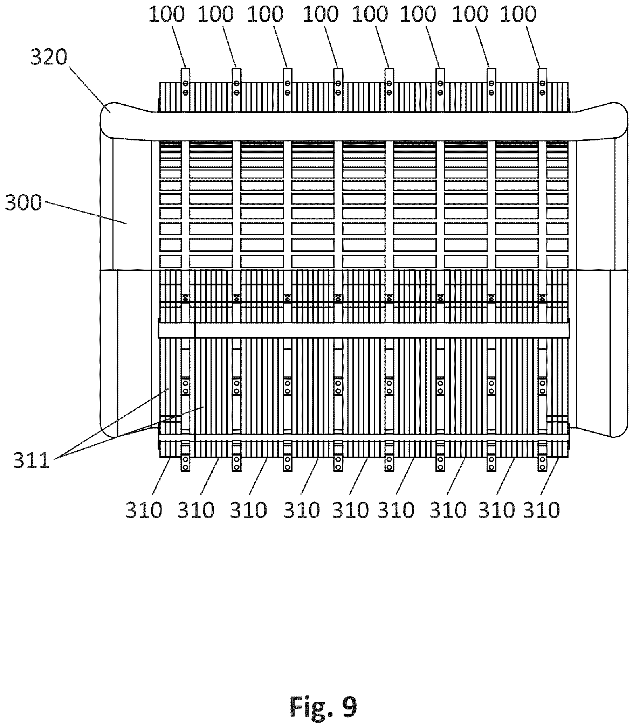

- Figure 9:: shows a partial sectional side view of a cooling system for stators of rotating electric machines, according to the invention.

### Detailed description of the invention

The detailed description below relates to the attached drawings in which embodiments of execution of the present invention are represented by way of non-limiting illustration. These embodiments are described so as to allow one skilled in the art to reproduce their results. Other embodiments resulting from structural, mechanical, logical, electric, and electronic changes are possible and can be carried out without departing from the spirit and scope of the present invention. The following detailed description should therefore not be construed as restrictive nor limiting.

The present invention relates to a cooling system for stators of rotating electric machines, or simply system, comprising at least one cooling plate (100) and at least one cooling fluid circuit for at least one cooling fluid, the system being applied to rotating electric machines comprising at least one stator (300) provided with packages of sheets (310), coils (320), and other elements and accessories necessary for the operation of a rotating electric machine of the nature dealt with herein.

In the context of the present invention, the term "rotating electric machine" refers broadly to a rotating electric machine for application in electric traction, preferably being an electric motor.

In the context of the present invention, the term "cooling fluid" refers broadly to a fluid with the function of removing heat from the rotating electric machine generated by its operation. Among the applicable cooling fluids, water and/or oil stand out in a non-limiting manner.

The cooling plate (100) comprises a main body (110) which, in its outer portion or external crown, comprises at least one central protrusion (120), a plurality of peripheral protrusions (130-1, ..., 130-n) and, optionally, one or more assembly cutouts (140) and, in its inner portion or internal crown, comprises a plurality of teeth (150) which form a plurality of grooves (160) between the teeth (150) and, in its interior, the main body (110) comprises a plurality of tangential channels (111-1, ..., 111-n).

Although the cooling plate (100) of the present invention preferably comprises a plurality of teeth (150) that form a plurality of grooves (160) between the teeth (150), it should be noted that, in alternative configurations of the present invention, the cooling plate (100) could also have a smooth inner portion or internal crown, without the presence of teeth (150) and, consequently, without grooves (160). However, the configuration with teeth (150) and grooves (160), in addition to facilitating the arrangement of the coils (320) of the stator (300), also facilitates the pressing of the packages of metal sheets (310).

The central protrusion (120) comprises at least one fluid inlet opening (121) and at least one fluid outlet opening (122), the openings being, preferably, but without limiting the invention, blind holes with a central axis perpendicular to the face of the main body (110). Furthermore, the central protrusion (120) may further comprise a plurality of fixing holes (124) which serve to mechanically fix the cooling plate (100) to at least one cooling fluidic circuit.

Starting from the upper face (123) of the central protrusion (120), the main body (110) comprises at least one, preferably at least two fluid inlet channels (110-1) and at least one, preferably at least two fluid outlet channels (110-2), the channels (110-1, 110-2) being preferably, but without limiting the invention, blind holes with a central axis perpendicular, in one plane, to the upper face (123) forming an angle (c) and, in another plane, perpendicular to the central axis of the fluid inlet opening (121) and of the fluid outlet opening (122) forming an angle (d), wherein the fluid inlet channels (110-1) pierce the fluid inlet opening (121) and the fluid outlet channels (110-2) pierce the fluid outlet opening (122) and end close to the inner portion or internal crown of the main body (110), but specifically, close to the bottom (160-1) of the grooves (160), establishing a fluidic connection between these channels (110-1, 110-2) and the openings (121, 122).

In the context of the present invention, a blind hole is a non-through hole which does not lead to the opposite end of the piece material, and can be countersunk, milled, or drilled to a certain depth without completely penetrating the material to the opposite side.

Each of the peripheral protrusions (130-1, ..., 130-n) comprises an external face (131) and at least a first side face (132-1) and at least a second side face (132-2). The first side face (132-1) and the second side face (132-2) of the peripheral protrusions (130-1, ..., 130-n) form an angle (a) with a tangent to the outer portion or external crown of the main body (110), wherein this angle (a) must have such a dimension that the central axes of the respective tangential channels (111-1, ..., 111-n) are, preferably, but without limiting the invention, perpendicular to the respective faces (132-1, 132-2), forming a right angle (b), to facilitate the manufacturing process of the cooling plate (100), more specifically the process of forming the respective tangential channels (111-1, ..., 111-n). The measurement of the angle (a) depends on the geometry of the main body (110), more specifically, on the quantity of peripheral protrusions (130-1, ..., 130-n) and thus on the quantity of tangential channels (111-1, ..., 111-n) needed to cover the entire length of the cooling plate (100).

Starting from a first side face (132-1) of a first peripheral protrusion (130-1), the main body (110) comprises at least one, preferably at least two first tangential channels (111-1) which extend from the first side face (132-1) towards the fluid inlet channels (110-1), piercing them and establishing a fluidic connection between the fluid inlet channels (110-1) and the first tangential channels (111-1). The first tangential channels (111-1) are, preferably, but without limiting the invention, blind holes made from the first side face (132-1) and which end immediately after having pierced the fluid inlet channels (110-1).

From a second side face (132-2) of the same first peripheral protrusion (130-1) or from a first side face (132-1) of a second peripheral protrusion (130-2), the main body (110) comprises at least one, preferably at least two second tangential channels (111-2) which extend from the second side face (132-2) of the first peripheral protrusion (130-1) towards a first side face (132-1) of a second peripheral protrusion (130-2), piercing the first tangential channels (111-1) and establishing a fluidic connection between the second tangential channels (111-2) and the first tangential channels (111-1). The second tangential channels are preferably, but without limiting the invention, through holes which extend from the second side face (132-2) of the first peripheral protrusion (130-1) to the first side face (132-1) of the second peripheral protrusion (130-2).

Likewise, from the adjacent peripheral protrusions (130-3, ..., 130-n), the main body (110) further comprises third tangential channels (111-3) which pierce the second tangential channels (111-2), fourth tangential channels (111-4) which pierce the third tangential channels (111-3), fifth tangential channels (111-5) which pierce the fourth tangential channels (111-4), sixth tangential channels (111-6) which pierce the fifth tangential channels (111-5), and seventh tangential channels (111-7) which pierce the sixth tangential channels (111-6).

It should be therefore noted that the through tangential channels (111-2, 111-3, 111-4, 111-5, 111-6, 111-7) can be initiated either from a second side face (132-2) of a peripheral protrusion or from a first side face (132-1) of the subsequent peripheral protrusion, when viewing the cooling plate (100) in a counterclockwise direction.

Finally, the main body (110) comprises n^{th} tangential channels (111-n) which extend from a second side face (132-2) of an n^{th} peripheral protrusion (130-n) towards the fluid outlet channels (110-2), piercing them and establishing a fluidic connection between the fluid outlet channels (110-2) and the n^{th} tangential channels (111-n). Furthermore, the n^{th} tangential channels (111-n) also pierce the seventh tangential channels (111-7), establishing a fluidic connection therebetween. The n^{th} tangential channels (111-n) are preferably, but without limiting the invention, blind holes made from the second side face (132-2) of the n^{th} peripheral protrusion (130-n) and ending immediately after having pierced the fluid outlet channels (110-2).

It should also be noted that, in alternative configurations, only one of the peripheral protrusions must have at least a first side face (132-1) and at least a second side face (132-2), while the other peripheral protrusions may be triangular in shape and have only one side face, wherein the respective tangential channels can be obtained from the perpendicular drilling of the only side face of the subsequent peripheral protrusion.

It should also be noted that the cooling plate (100) may eventually and optionally, but without limiting the invention, not comprise any peripheral protrusion (130-1, ..., 130-n), the tangential channels (111-1, ..., 111-n) being drilled from the external edge around the external diameter of the cooling plate (100). However, it should be noted that the configuration comprising peripheral protrusions (130-1, ..., 130-n) facilitates the formation process for the tangential channels (111-1, ..., 111-n).

It should also be noted that the cooling plate (100) may eventually and optionally, but without limiting the invention, comprise at least one peripheral protrusion (130-1, ..., 130-n) or even have multiple and/or alternating peripheral protrusions (130-1, ..., 130-n) in their position around the external diameter of the cooling plate (100).

Each of the holes of the fluid inlet channels (110-1), fluid outlet channels (110-2), and tangential channels (111-1, ..., 111-n) is closed by means of a sealing element (112), wherein the sealing element (112) must have a longitudinal dimension such that it serves only and solely to close the holes and prevent the passage of cooling fluid, without interfering with any of the established fluidic connections. It should be noted that the sealing element (112) should preferably be, but without limiting the invention, a weld applied to the holes of the channels (110-1, 110-2, 111-1, ..., 111-n), and may also alternatively be a bushing or a headless screw, a cover, a plug, or any other solution suitable for the application.

As such, an internal fluidic circuit is established inside the cooling plate (100) and extends from the fluid inlet opening (121), passing through the tangential channels (111-1, ..., 111-n) until it reaches the fluid outlet opening (122).

The cooling plate (100) of the invention must have a geometry preferably, but without limiting the invention, equal to the geometry of the sheets (311) of the packages of sheets (310) of the stator (300) of the electric machine for which it is intended, except for the central protrusion (120) which must project radially beyond the packages of sheets (310) so as to allow the fluidic connection of the cooling plate (100) to at least one cooling fluidic circuit. The material of a cooling plate (100) of the invention must be a material preferably, but without limiting the invention, with high thermal conductivity and non-magnetic, so as not to compromise the electromagnetic features of the stator (300).

It should be noted that the geometry and construction of a cooling plate (100) according to the invention allows its use both at the axial ends of the stator (300) and, preferably, but without limiting the invention, between adjacent sheets (311) of the packages of sheets (310) of the stator (300).

Therefore, it is possible to use more than one cooling plate (100) for each stator (300), wherein these cold plates (100) can be distributed along the axial length of the stator (300) with axial distance therebetween. The quantity of cooling plates (100) depends on the thermal and electric dimensions of the rotating electric machine for which they are intended. Therefore, there may be a plurality of cooling plates (100) arranged between sheets (311) of the packages of sheets (310) of the same stator (300).

The internal fluidic circuit of the cooling plate (100) of the invention therefore comprises tangential channels (111-1, ..., 111-n) arranged between the outer portion or external crown and the inner portion or internal crown of the main body (110) and especially closer to the grooves (160), in particular to the bottom (160-1) of the grooves (160), which is the region of greatest heating of the stator (300), thus allowing a significant improvement in the dissipation of the heat generated in the stator (300).

It should be noted that, despite the non-limiting example of the invention disclosed herein, the quantity of peripheral protrusions (130-1, ..., 130-n) and, thus, the quantity of resulting tangential channels (111-1, ..., 111-n) will also depend on the constructive, fluid-thermal, and electric dimensioning of the rotating electric machine. The diameter and quantity of tangential channels (111-1, ..., 111-n) for each part of the internal fluidic circuit of the cooling plate (100) will depend mainly on the thickness (e) and other dimensions of the cooling plate (100), and the quantity "n" of tangential channels that form the polygonal geometry of the channels may vary, for instance, but without limiting the invention, from 3 to 16, always connecting the channels (111-n) with the previous channels (111-(n-1)). It should be noted that the use of a plurality of tangential channels (111-1, ..., 111-n), parallel to each other, allows for smaller diameters and, thus, the use of thinner cooling plates (100), maintaining the same passage area of a single hole of larger diameter. The thinner the cooling plates (100), the better the electromagnetic performance of the rotating electric machine, thus reducing the weight of the rotating electric machine motor.

The non-through fluid inlet channels (110-1), fluid outlet channels (110-2), and tangential channels (111-1, 111-n) reduce sealing points, while the through tangential channels (111-2, 111-3, 111-4, 111-5, 111-6, 111-7) allow for visual and dimensional inspection of these tangential channels (111-2, 111-3, 111-4, 111-5, 111-6, 111-7).

It should also be noted that the cross sections of the tangential channels (111-1, ..., 111-n) of the cooling plate (100) of the invention may have different geometries, preferably being, but without limiting the invention, holes with a circular cross section, and may also have a polygonal or elliptical cross section.

A cooling fluid circuit, according to the invention, is a circuit connected to at least one, preferably more than one cooling plate (100) of the invention, providing circulation of the cooling fluid from the fluid inlet (121) to the fluid outlet (122), passing through the internal fluid circuit of the cooling plate (100). Should there be more than one cooling plate (100) in the same stator (300), the connection between adjacent cooling plates (100) is made in parallel, so that the fluid inlets (121) of the plates are connected to each other in parallel in a supply portion of the cooling fluidic circuit and the fluid outlets (122) are connected to each other in parallel in a return portion of the cooling fluidic circuit. It should be noted that serial connections of the fluid inlets (121) and fluid outlets (122) are also possible but would have disadvantages in the cooling system's fluid-thermodynamic behavior, mainly regarding head loss.

A cooling fluid circuit of the invention is a circuit known in the state of the art, comprising hoses and/or pipes and/or ducts and/or other means of conducting fluids and at least one fluid pumping means, in addition to connections, joints, valves, registers, filters, pressure gauges, traps and other elements necessary for the operation of a fluid circuit of the nature dealt with herein, and also already known in the state of the art.

Practical tests and numerical simulations have proven that the use of cooling plates (100) according to the invention, in addition to reducing the total mass of the motor in relation to similar solutions known in the state of the art which use worms, significantly reduce the temperature in the region of the coils (320) and increase the power density (measured in kW/kg) of the electric machine by up to 60% in relation to equivalent rotating electric machines using worms for cooling, wherein this increase in power density is as great as the quantity of cooling plates (100). However, from a certain optimum number of cooling plates (100) used, there is no longer a significant increase in power density, and it may even regress. And in addition, the more cooling plates (100), the greater the increase in mass of the rotating electric machine.

A method of manufacturing a cooling plate (100) according to the invention is a manufacturing method comprising the following method steps:
A. Providing a cooling plate (100) in the form of a solid piece, comprising a main body (110) comprising at least one central protrusion (120), a plurality of peripheral protrusions (130-1, ..., 130-n), a plurality of teeth (150) and a plurality of grooves (160);
B. Fixing the cooling plate (100) to a machine tool with at least one cutting tool capable of promoting mechanical wear of the material of the cooling plate (100);
C. Providing, in the central protrusion (120), by means of a cutting tool of the machine tool, at least one fluid inlet opening (121) and at least one fluid outlet opening (122), all in the form of holes perpendicular to the face of the main body (110);
D. Providing, from an upper face (123) of the central protrusion (120), by means of a cutting tool of the machine tool, at least one, preferably at least two fluid inlet channels (110-1) and at least one, preferably at least two fluid outlet channels (110-2), both in the form of blind holes with a central axis perpendicular to the central axis of the openings (121, 122) provided in step C, wherein the fluid inlet channels (110-1) pierce the fluid inlet opening (121) and the fluid outlet channels (110-2) pierce the fluid outlet opening (122) and end close to the inner portion or internal crown of the main body (110);
E. Providing, from a first side face (132-1) of a first peripheral protrusion (130-1) of the main body (110), by means of a cutting tool of the machine tool, at least one, preferably at least two first tangential channels (111-1) in the form of blind holes with a central axis perpendicular to the first side face (132-1) which extend from the first side face (132-1) towards the fluid inlet channels (110-1), piercing them;
F. Providing, from a second side face (132-2) of the first peripheral protrusion (130-1) or from a first side face (132-1) of a second peripheral protrusion (130-2) of the main body (110), by means of a cutting tool of the machine tool, at least one, preferably at least two second tangential channels (111-2) in the form of through holes with a central axis perpendicular to the second side face (132-2) of the first peripheral protrusion (130-1) or perpendicular to the first side face (132-1) of the second peripheral protrusion (130-2), wherein the second tangential channels (111-2) extend from the second side face (132-2) of the first peripheral protrusion (130-1) towards a first side face (132-1) of a second peripheral protrusion (130-2), piercing the first tangential channels (111-1);
G. Repeating steps E and F providing third tangential channels (111-3) which pierce the second tangential channels (111-2);
H. Repeating steps E and F providing fourth tangential channels (111-4) which pierce the third tangential channels (111-3);
I. Repeating steps E and F providing fifth tangential channels (111-5) which pierce the fourth tangential channels (111-4);
J. Repeating steps E and F providing sixth tangential channels (111-6) which pierce the fifth tangential channels (111-5);
K. Repeating steps E and F providing seventh tangential channels (111-7) which pierce the sixth tangential channels (111-6);
L. Providing, from a second side face (132-2) of an n^{th} peripheral protrusion (130-n), at least one, preferably at least two n^{th} tangential channels (111-n) in the form of blind holes with a central axis perpendicular to the second side face (132-2) which extend from the second side face (132-2) towards the fluid outlet channels (110-2), piercing them;
M. Releasing the cooling plate (100) from its fixing and fix it in another position and/or in another machine and/or device and/or jig;
N. Sealing each of the holes of the fluid inlet channels (110-1), fluid outlet channels (110-2), and tangential channels (111-1, ..., 111-n) with a sealing element (112).

It should be noted that the cooling plate (100) of step A may further optionally comprise one or more assembly cutouts (140).

It should also be noted that the number of peripheral protrusions (130-1, ..., 130-n) in the cited example should not be understood as limiting the invention, give that, depending on the dimensions and specifications of the cooling plate (100), there may be a greater or even smaller number of peripheral protrusions (130-1, ..., 130-n), wherein the n^{th} peripheral protrusion (130-n) should be understood as the last peripheral protrusion, when viewing the cooling plate (100) from a counterclockwise direction.

It should also be noted that between the steps of the aforementioned manufacturing method, it may be necessary, depending on the used machine tool, to release the cooling plate (100) from its fixing and fix it in another position and/or in another machine with at least one cutting tool capable of promoting mechanical wear of the material of the cooling plate (100).

Providing a cooling plate (100), in the context of the invention and particularly in step A of the method described above, is manufacturing a cooling plate (100) from a metal piece, which may be stamped, cut by laser or plasma or the like, cast, obtained by at least one additive manufacturing process, etc.

It should also be noted that the through tangential channels (111-2, 111-3, 111-4, 111-5, 111-6, 111-7) can be initiated either from a second side face (132-2) of a peripheral protrusion or from a first side face (132-1) of the subsequent peripheral protrusion, when viewing the cooling plate (100) from a counterclockwise direction.

It should also be noted that a machine tool, in the context of the present invention, is a mechanical equipment used in the manufacture and finishing of metal pieces and components. Such machines are designed to shape, cut, bore, turn, grind, and perform other machining operations on materials such as metal. Some examples of machine tools include lathes, milling machines, boring machines, drills, and saws. Therefore, a machine tool comprises at least one cutting tool capable of promoting mechanical wear of the material of the cooling plate (100), according to the method of the invention, and must be a machine capable of making holes in the material of the cooling plate (100), and may be a manual or bench-mounted drill and/or a milling machine and/or an electroerosion machine.

Finally, a rotating electric machine according to the invention is an electric motor or an electric generator comprising at least one, preferably all, of the elements of the cooling system for stators of the invention.

### Conclusion

It will be easily understood by one skilled in the art that modifications may be made to the present invention without departing from the concepts set out in the description above. Such modifications should be considered as included within the scope of the present invention. Consequently, the particular embodiments previously described in detail are illustrative and exemplary only and are non-restrictive as to the scope of the present invention, which should be given the full extent of the appended claims and any and all equivalents thereof.

## Claims

1. Cooling system for stators of rotating electric machines, comprising at least one cooling plate (100) and at least one cooling fluidic circuit, **characterized in that** the cooling plate (100) comprises a main body (110) which, in its outer portion or external crown, comprises at least one central protrusion (120), a plurality of peripheral protrusions (130-1, ..., 130-n) and, in its inner portion or internal crown, comprises a plurality of teeth (150) which form a plurality of grooves (160) between the teeth (150), wherein the main body (110), in its interior, comprises a plurality of tangential channels (111-1, ..., 111-n).

2. System, according to claim 1, **characterized in that** the central protrusion (120) comprises at least one fluid inlet opening (121) and at least one fluid outlet opening (122), the openings (121, 122) being preferably blind holes with a central axis perpendicular to the face of the main body (110).

3. System, according to claim 1, **characterized in that** the main body (110) comprises, from an upper face (123) of the central protrusion (120), at least one, preferably at least two fluid inlet channels (110-1) and at least one, preferably at least two fluid outlet channels (110-2), the channels (110-1, 110-2) preferably being blind holes with a central axis perpendicular, in one plane, to the upper face (123) forming an angle (c) and, in another plane, perpendicular to the central axis of the fluid inlet opening (121) and of the fluid outlet opening (122) forming an angle (d), wherein the fluid inlet channels (110-1) pierce the fluid inlet opening (121), and the fluid outlet channels (110-2) pierce the fluid outlet opening (122) and end close to the inner portion or internal crown of the main body (110).

4. System, according to claim 1, **characterized in that** each of the peripheral protrusions (130-1, ..., 130-n) comprises an external face (131) and at least a first side face (132-1) and at least a second side face (132-2), wherein the first side face (132-1) and the second side face (132-2) form an angle (a) with a tangent to the outer portion or external crown of the main body (110).

5. System, according to claim 4, **characterized in that** the angle (a) is of a dimension that the central axes of the respective tangential channels (111-1, ..., 111-n) are perpendicular to the respective faces (132-1, 132-2), forming a right angle (b) between the central axes of the tangential channels (111-1, ..., 111-n) and the respective faces (132-1, 132-2).

6. System, according to claim 1, **characterized in that** the main body (110) comprises, from a first side face (132-1) of a first peripheral protrusion (130-1), at least one, preferably at least two first tangential channels (111-1) which extend from the first side face (132-1) towards the fluid inlet channels (110-1), piercing them and establishing a fluidic connection between the fluid inlet channels (110-1) and the first tangential channels (111-1).

7. System, according to claim 1, **characterized in that** the main body (110) comprises, from a second side face (132-2) of the first peripheral protrusion (130-1) or from a first side face (132-1) of a second peripheral protrusion (130-2), at least one, preferably at least two second tangential channels (111-2) which extend from the second side face (132-2) of the first peripheral protrusion (130-1) towards a first side face (132-1) of a second peripheral protrusion (130-2), piercing the first tangential channels (111-1) and establishing a fluidic connection between the second tangential channels (111-2) and the first tangential channels (111-1).

8. System, according to claim 7, **characterized in that** the second tangential channels (111-2) are preferably through holes which extend from the second side face (132-2) of the first peripheral protrusion (130-1) to the first side face (132-1) of the second peripheral protrusion (130-2).

9. System, according to claim 1, **characterized in that** the main body (110) further comprises third tangential channels (111-3) which pierce the second tangential channels (111-2), fourth tangential channels (111-4) which pierce the third tangential channels (111-3), fifth tangential channels (111-5) which pierce the fourth tangential channels (111-4), sixth tangential channels (111-6) which pierce the fifth tangential channels (111-5), and seventh tangential channels (111-7) which pierce the sixth tangential channels (111-6).

10. System, according to claim 1, **characterized in that** the main body (110) comprises n^{th} tangential channels (111-n) which extend from a second side face (132-2) of an n^{th} peripheral protrusion (130-n) towards the fluid outlet channels (110-2), piercing them and establishing a fluidic connection between the fluid outlet channels (110-2) and the n^{th} tangential channels (111-n).

11. System, according to claim 10, **characterized in that** the n^{th} tangential channels (111-n) pierce the seventh tangential channels (111-7), establishing a fluidic connection therebetween.

12. System, according to any one of claims 1 to 11, **characterized in that** each of the holes of the fluid inlet channels (110-1), the fluid outlet channels (110-2), and the tangential channels (111-1, ..., 111-n) is closed by means of a sealing element (112).

13. Method of manufacturing a cooling plate (100), for manufacturing a cooling plate (100) defined in any one of claims 1 to 12, **characterized in that** it comprises the following method steps:
A. Providing a cooling plate (100) in the form of a solid piece, comprising a main body (110) comprising at least one central protrusion (120), a plurality of peripheral protrusions (130-1, ..., 130-n), a plurality of teeth (150) and a plurality of grooves (160);
B. Fixing the cooling plate (100) to a machine tool with at least one cutting tool capable of promoting mechanical wear of the material of the cooling plate (100);
C. Providing, in the central protrusion (120), by means of a cutting tool of the machine tool, at least one fluid inlet opening (121) and at least one fluid outlet opening (122), all in the form of holes perpendicular to the face of the main body (110);
D. Providing, from an upper face (123) of the central protrusion (120), by means of a cutting tool of the machine tool, at least one, preferably at least two fluid inlet channels (110-1) and at least one, preferably at least two fluid outlet channels (110-2), both in the form of blind holes with a central axis perpendicular to the central axis of the openings (121, 122) provided in step C, wherein the fluid inlet channels (110-1) pierce the fluid inlet opening (121) and the fluid outlet channels (110-2) pierce the fluid outlet opening (122) and end close to the inner portion or internal crown of the main body (110);
E. Providing, from a first side face (132-1) of a first peripheral protrusion (130-1) of the main body (110), by means of a cutting tool of the machine tool, at least one, preferably at least two first tangential channels (111-1) in the form of blind holes with a central axis perpendicular to the first side face (132-1) which extend from the first side face (132-1) towards the fluid inlet channels (110-1), piercing them;
F. Providing, from a second side face (132-2) of the first peripheral protrusion (130-1) or from a first side face (132-1) of a second peripheral protrusion (130-2) of the main body (110), by means of a cutting tool of the machine tool, at least one, preferably at least two second tangential channels (111-2) in the form of through holes with a central axis perpendicular to the second side face (132-2) of the first peripheral protrusion (130-1) or perpendicular to the first side face (132-1) of the second peripheral protrusion (130-2), wherein the second tangential channels (111-2) extend from the second side face (132-2) of the first peripheral protrusion (130-1) towards a first side face (132-1) of a second peripheral protrusion (130-2), piercing the first tangential channels (111-1);
G. Repeating steps E and F by providing additional tangential channels (111-3, ..., 111-n) up to at least one, preferably at least two n^{th} tangential channels (111-n), wherein the n^{th} tangential channels (111-n) are provided from a second side face (132-2) of the n^{th} peripheral protrusion (130-n) in the form of blind holes with a central axis perpendicular to the second side face (132-2) which extend from the second side face (132-2) towards the fluid outlet channels (110-2), piercing them;
H. Sealing each of the holes of the fluid inlet channels (110-1), fluid outlet channels (110-2), and tangential channels (111-1, ..., 111-n) with a sealing element (112).

14. Rotating electric machine, **characterized in that** it is an electric motor or an electric generator comprising at least one, preferably all the elements of the cooling system for stators defined in any one of claims 1 to 13.
